# FASCICULE DE BREVET EUROPEEN

(11) **EP 0 553 039 B1**
(45) Date de publication et mention de la délivrance du brevet: **26.03.1997**
(21) Numéro de dépôt: 93420021.3
(22) Date de dépôt: 19.01.1993
(51) Int. Cl.: F16L 3/22, H02G 3/04

(54) **Chemin de câbles en treillis soudé**
Kabelrinne aus verlötetem Drahtgitter
Cableway made of soldered mesh

(30) Priorité: 20.01.1992 FR 9200723
(43) Date de publication de la demande: 28.07.1993
(73) Titulaire: MAVIL, F-21430 Liernais (FR)
(72) Inventeur: Simon, Bernard, F-69300 Caluire (FR)
(74) Mandataire: Karmin, Roger

(56) Documents cités:
- EP-A- 0 292 389
- EP-A- 0 352 191
- DE-A- 4 037 412
- FR-A- 2 395 449
- FR-A- 2 617 341

## Description

La présente invention a trait à un chemin de câbles en treillis soudé dont les bords supérieurs des fils de trame sont conformés pour éviter toute blessure des câbles ou canalisations de transport de fluide.

On connaît des chemins de câbles de ce genre qui comprennent généralement des tronçons en forme de gouttière qui sont assemblés les uns aux autres pour supporter des canalisations diverses et en particulier des câbles électriques. Chaque tronçon de chemin de câbles est constitué par des fils de trame en forme de U sur lesquels sont soudés d'une part sous le fond des fils longitudinaux et d'autre part sur l'extérieur des branches du U des fils de rive supérieurs. Les tronçons de chemin de câbles comportent suivant leur dimension un certain nombre de fils de trame, de fils longitudinaux et de fils de rive. Un tel chemin de câbles est décrit dans le document DE-A-40 37 412.

De tels tronçons de chemin de câbles comportent l'inconvénient de risquer de blesser les câbles électriques lors de leur mise en place et plus particulièrement ceux se trouvant à proximité des extrémités supérieures des fils de trame. Ces blessures sont essentiellement dues aux arêtes tranchantes que comportent les extrémités supérieures des fils de trame.

C'est à ces inconvénients qu'entend plus spécialement remédier la présente invention.

A cet effet, chaque tronçon de chemin de câbles en treillis soudé suivant l'invention qui comprend des fils de trame en forme de U, est caractérisé en ce que les bouts libres des branches latérales sont repliés vers l'extérieur du U pour créer un crochet, tandis que deux fils de rive sont soudés à l'intérieur du pli, réalisé par le crochet.

Les deux fils de rive sont soudés à l'intérieur du pli de chaque fil de trame afin de constituer un ensemble de plus grande rigidité et peuvent être de diamètres différents ou de mêmes diamètres.

De plus, un autre avantage suivant l'invention consiste en ce que les plis formés par chaque crochet augmentent la sécurité des chemins de câbles, car ils permettent de retenir les fils de rive en cas de rupture des points de soudure.

Le dessin annexé, donné à titre d'exemple, permettra de mieux comprendre l'invention, les caractéristiques qu'elle présente et les avantages qu'elle est susceptible de procurer :

Fig. 1 est une vue en perspective illustrant un tronçon de chemin de câble du domaine antérieur.

Fig. 2 est une demi-coupe suivant II-II (fig. 1) montrant les risques de blessures d'un câble lors de sa mise en place.

Fig. 3 est une vue en perspective illustrant un tronçon de chemin de câbles suivant la présente invention.

Fig. 4 est une vue en perspective semblable à celle de fig. 3 représentant une variante d'exécution d'un tronçon de chemin de câbles.

Fig. 5 illustre la mise en place d'un câble à l'intérieur du tronçon de chemin de câbles conforme à l'invention.

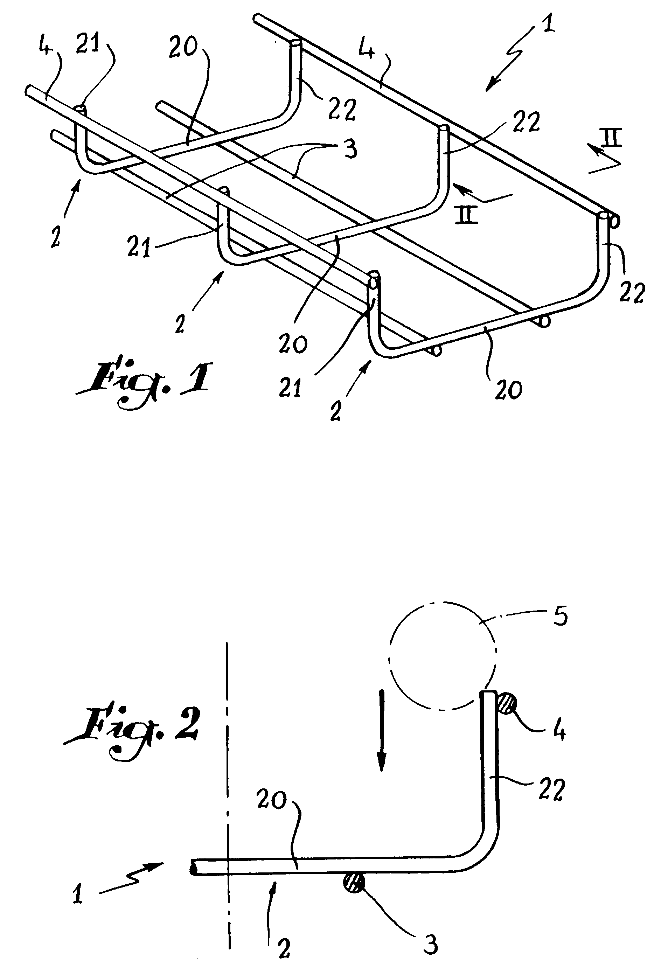

On a représenté en fig. 1 un tronçon de chemin de câbles 1 comprenant un certain nombre de fils de trame 2 en forme de U reliés les uns aux autres par l'intermédiaire de fils longitudinaux 3 soudés sous le fond 20 du U. Le nombre de fils longitudinaux 3 varie suivant la largeur dudit fond 20. Chaque fil de trame 2 comporte des branches latérales 21 et 22 qui sont respectivement reliées aux branches latérales voisines par des fils de rive 4 dont le nombre varie suivant la hauteur des branches. Cependant, quels que soient la hauteur des branches des fils de trame 2 et le nombre de fils de rive 4, il existe toujours au moins un fil de rive qui est soudé sur l'extrémité des branches latérales 21 et 22 de chaque fil de trame 2, de manière à rigidifier parfaitement l'ensemble.

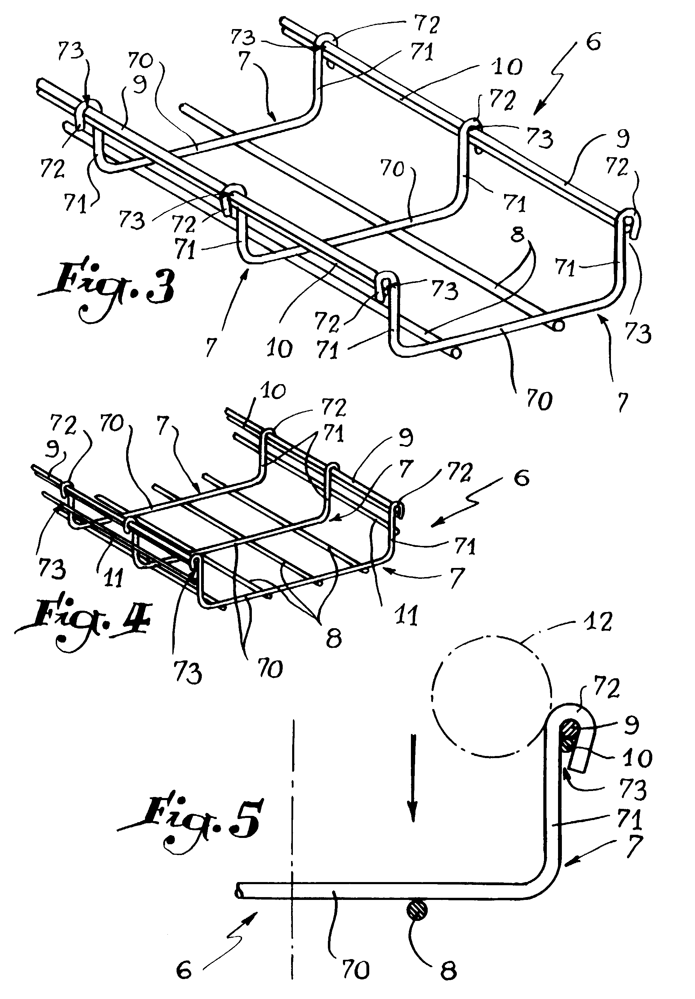

En fig. 2, on a montré la mise en place d'un élément 5, par exemple un câble électrique. On remarque que ce dernier peut être blessé, au moment de son introduction, par les extrémités des branches latérales 21 et 22 de chaque fil de trame 2.

On constate que les extrémités de chaque branche latérale 21 et 22 font saillie et sont particulièrement tranchantes, risquant ainsi de couper la gaine du câble électrique 5 et de provoquer soit des courtscircuits, soit des dommages plus importants. Cette blessure peut être réalisée lors de la mise en place des câbles ou lorsque le chemin de câbles est trop rempli et que le câble électrique 5 est en appui sur l'extrémité des branches latérales 21 et 22 des fils de trame 2.

On a représenté en fig. 3 un tronçon de chemin de câbles 6 suivant la présente invention comprenant un certain nombre de fils de trame 7 en forme de U. Chaque fil de trame 7 comporte principalement un fond 70 et des branches latérales 71. Les bouts de ces dernières sont repliés en direction de l'extérieur du U en forme de crochet 72. Le dessous du fond 70 des fils de trame 7 est solidaire de fils longitudinaux 8 dont le nombre varie suivant la largeur du fond 70, comme représenté en fig. 4. A l'intérieur des plis 73, réalisés par les crochets 72 de chaque fil de trame 7, sont soudés deux fils de rive 9 et 10 de diamètres différents. Ces fils de rive permettent de rigidifier la structure du tronçon de chemin de câble 6.

Lorsque les branches latérales 71 des fils de trame 7 sont d'une plus grande hauteur, il est prévu en dessous des crochets 72 un autre fil de rive 11 propre à consolider l'ensemble du tronçon de chemin de câbles 6 (fig. 4).

On a montré en fig. 5 la mise en place d'un élément 12, par exemple un câble électrique. On remarque que ce dernier peut venir en contact avec les extrémités supérieures des fils de trame 7 sans risquer d'être blessé. En effet, la périphérie externe des crochets 72 de chaque fil de trame 7 présente une forme arrondie à l'intérieur du tronçon de chemin de câbles 6 qui évite de blesser le câble électrique 12 soit lors de sa mise en place, soit lorsque celui-ci est en appui constant contre au moins l'un de ses côtés.

De plus, les extrémités des crochets 72 qui se trouvent à l'extérieur de chaque tronçon de chemin de câbles 6 permettent d'accrocher un capot de protection connu en soi, mais non représenté.

Chaque tronçon de chemin de câbles 6 est trempé dans un bain de matière plastique telle que de l'époxy en vue de les protéger.

## Revendications

1. Chemin de câble en treillis soudé comportant des fils de trame en forme de U dont l'extérieur des extrémités supérieures est solidaire de fils de rive, caractérisé en ce que les bouts libres des branches latérales (71) des fils de trames (7) sont repliés vers l'extérieur du U pour créer un crochet (72), tandis que deux fils de rive (9, 10) sont soudés à l'intérieur du pli (73), réalisé par le crochet (72).

2. Chemin de câble en treillis soudé suivant la revendication 1, caractérisé en ce que les fils de rive (9, 10) sont de diamètres différents.

3. Chemin de câble en treillis soudé suivant la revendication 1, caractérisé en ce qu'un fils de rive (11) est soudé en dessous des crochets (72).

4. Chemin de câble en treillis soudé suivant la revendication 1, caractérisé en ce que les extrémités des crochets (72) permettent d'accrocher un capot de protection.

## Patentansprüche

1. Als geschweißtes Gitter ausgebildeter Kabelweg mit Schußdrähten in U-Form, deren obere Enden außen mit Randdrähten verbunden sind,
**dadurch gekennzeichnet**, daß die freien Enden der seitlichen Arme (71) der Schußdrähte (7) zum Äußeren des U's gebogen sind, um einen Haken (72) zu bilden, während die zwei Randdrähte (9,10) im Inneren der durch den Haken gebildeten Biegestelle (73) verschweißt sind.

2. Als geschweißtes Gitter ausgebildeter Kabelweg nach Anspruch 1, dadurch gekennzeichnet, daß die Randdrähte (9,10) unterschiedliche Durchmesser aufweisen.

3. Als geschweißtes Gitter ausgebildeter Kabelweg, nach Anspruch 1, dadurch gekennzeichnet, daß ein Randdraht (11) unter dem Haken (72) geschweißt ist.

4. Als geschweißtes Gitter ausgebildeter Kabelweg, nach Anspruch 1, dadurch gekennzeichnet, daß die Enden der Haken (72) ein Anhängen eines Schutzmantels erlauben.

## Claims

1. A cable track of soldered meshwork comprising frame wires in the form of a U whereof the outside of the upper extremities is secured to side wires, characterised in that the free ends of the lateral branches (71) of the frame wires (7) are folded towards the outside of the U to create a hook (72) whereas two side wires (9,10) are soldered inside the fold (73) constituted by the hook (72).

2. A cable track of soldered meshwork according to claim 1, characterised in that the side wires (9,10) are of different diameters.

3. A cable track of soldered meshwork according to claim 1, characterised in that one of the side wires (11) is soldered under the hooks (72).

4. A cable track of soldered meshwork according to claim 1, characterised in that the extremities of the hooks (72) allow the hitching of a protective hood.
